# DEMANDE DE BREVET EUROPEEN

(11) **EP 1 720 350 A1**
(43) Date de publication de la demande: **08.11.2006**
(21) Numéro de dépôt: 05103715.8
(22) Date de dépôt: 03.05.2005
(51) Int. Cl.: H04N 7/167, G07F 7/10

(54) **Module de sécurité destiné au contrôle d'accès à des contenus**

(71) Demandeur: Nagracard S.A., 1033 Cheseaux-sur-Lausanne (CH)
(72) Inventeur: Kudelski, André, 1095 Lutry (CH)
(74) Mandataire: Wenger, Joel-Théophile

(57) **Abrégé**

Il est connu que des tiers malveillants analysent tout le trafic entre une unité de réception et un module de sécurité afin de découvrir des informations leur permettant d'accéder à un contenu de façon illicite.

C'est pourquoi la présente demande se propose d'améliorer la sécurité des modules de sécurité en particulier, la sécurité des données transitant entre le module et l'unité de réception.

Ce but est atteint par un module de sécurité comprenant une unité centrale, des premiers moyens de communication destinés à transmettre des informations avec une unité de réception caractérisée en ce qu'il comprend en outre des seconds moyens de communication actifs par voie hertzienne, ces seconds moyens permettant une liaison vers un centre de traitement.

## Description

La présente demande concerne le domaine des modules de sécurité, en particulier des modules de sécurité contrôlant l'accès à des services de données disponibles via un serveur de diffusion.

De façon bien connue de l'homme du métier, le module de sécurité peut être réalisé essentiellement selon trois formes distinctes. L'une d'elles est une carte à microprocesseur, une carte à puce, ou plus généralement un module électronique (ayant une forme de clé, de badge,...). Un tel module est généralement amovible et connectable au décodeur. La forme avec contacts électriques est la plus utilisée, mais n'exclut pas une liaison sans contact par exemple de type ISO 14443.

Une deuxième forme connue est celle d'un boîtier de circuit intégré placé, généralement de façon définitive et inamovible dans le boîtier du décodeur. Une variante est constituée d'un circuit monté sur un socle ou connecteur tel qu'un connecteur de module SIM.

Dans une troisième forme, le module de sécurité est intégré dans un boîtier de circuit intégré ayant également une autre fonction, par exemple dans un module de désembrouillage du décodeur ou le microprocesseur du décodeur.

Ces modules de sécurité reçoivent via leur moyen de communication, des messages pour traitement, principalement destinés à gérer les droits d'utilisation des contenus diffusés. Ces contenus sont encryptés afin de contrôler l'accès aux dits contenus. Les droits d'accès sont gérés par des messages de gestion transmettant les droits ou les clés permettant de décrypter un contenu.

Par contenu, on entend des données audio/vidéo, des données audio, des jeux, des données informatives (météo, cours de bourse ...) des images, les logo, des jingles etc.

L'unité de réception tel qu'un récepteur de télévision, un téléphone portable, un palm, ou tout autre unité capable de recevoir et d'exploiter ces données, est connectée à un ou plusieurs centres de diffusion. Ces centres transmettent par voie hertzienne (DVB-H, UMTS, GPRS, WIMAX etc) ou par voie câblée (IP, câble, secteur etc) des contenus encryptés à destination des unités de réception.

Dans le domaine de la télévision à péage, un contenu est encrypté par une pluralité de clés appelées "mot de contrôle", chacun de ces mots de contrôle étant actif sur une portion du contenu.

Parallèlement, des messages de contrôle sont transmis contenant lesdits mots de contrôle, ces messages étant encryptés par une clé de transmission.

Ces messages sont reçus par l'unité de réception et transmis au module de sécurité pour vérification et décryption. Le module de sécurité comprend les clés nécessaires à la décryption des messages, en particulier la clé de transmission. Il vérifie si les droits sont présents pour l'exploitation du contenu associé à ces messages et dans l'affirmative retourne à l'unité de réception le mot de contrôle nécessaire à l'accès au contenu.

Des messages d'administration sont transmis du centre de diffusion (ou d'un autre centre selon l'implémentation) pour accorder des droits, transmettre la ou les clés de transmission, pour mettre à jour la sécurité dans le module de sécurité.

Il est connu que des tiers malveillants analysent tout le trafic entre l'unité de réception et le module de sécurité afin de découvrir des informations leur permettant d'accéder au contenu de façon illicite.

C'est pourquoi la présente demande se propose d'améliorer la sécurité des modules de sécurité en particulier, la sécurité des données transitant entre le module et l'unité de réception.

Ce but est atteint par un module de sécurité comprenant une unité centrale, des premiers moyens de communication destinés à transmettre des informations avec une unité de réception caractérisée en ce qu'il comprend en outre des seconds moyens de communication actifs par voie hertzienne, ces seconds moyens permettant une liaison vers un centre de traitement.

Par moyens de communication actifs, on entend des moyens pouvant recevoir des informations sans apport d'énergie électromagnétique.

Ainsi, le module de sécurité de la présente invention comprend un bloc de réception RF pouvant recevoir des informations de la part d'un centre de traitement pouvant se situer à une grande distance de l'unité de réception.

Ceci permet d'augmenter la sécurité par l'utilisation de mesures conjointes de protection, c'est-à-dire par des informations provenant de l'unité de réception via les premiers moyens de sécurité et d'informations provenant du bloc de réception RF.

Ainsi, pour accéder à un contenu encrypté, il sera nécessaire de disposer des deux voies de communication. Dans la demande W00156287, le mot de contrôle utilisé par l'unité de réception est une combinaison d'un mot de contrôle reçu dans un message de contrôle et une clé reçue préalablement et valable pour plusieurs canaux. Selon l'invention, la réception du message comprenant la clé maître est par exemple transmise via les seconds moyens de communication au module de sécurité.

Cette voie de communication peut être aussi utilisée comme voie de retour pour informer de la consommation de l'utilisateur, traiter le crédit d'achat impulsif ou effectuer la mise à jour des fonctions logicielles.

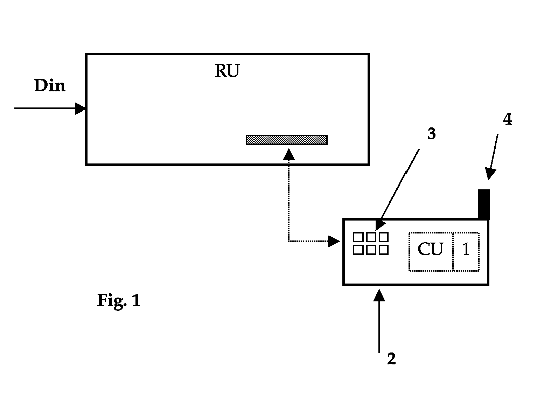

L'invention sera mieux comprise grâce à la description détaillée qui va suivre et qui se réfère à la figure annexée qui est donnée à titre d'exemple nullement limitatif, et qui illustre une unité de réception avec son module de sécurité.

L'unité de réception RU reçoit par des voies classiques Din des données, que ce soit par voie hertzienne ou voie câblée.

Le récepteur est connecté à un module de sécurité 2 qui est représenté sous la forme d'une carte à puce. Les premiers moyens de communication 3 sont constitués ici par une série de contacts au format ISO 7816.

Les seconds moyens de communication 1 sont connectés à l'unité centrale CU du module de sécurité et à une antenne 4. Ainsi ce module peut communiquer directement avec un centre de traitement qui peut être différent du centre de diffusion des données Din.

Selon l'invention, tout ou partie des clés de sécurité sont transmises via les seconds moyens de communication. Selon un mode de réalisation, ce module de sécurité dispose d'un compteur d'activité, soit en temps, soit en nombre d'opérations et cesse de retourner les mots de contrôle si aucune liaison n'est faite par les seconds moyens de communication. Il peut, au lieu de cesser de fonctionner, ralentir la fourniture des mots de contrôle, voire inhiber certains services.

D'autres combinaisons peuvent être imaginées pour augmenter la sécurité de réception. Ainsi, la portée des seconds moyens de communication étant limitée, il est possible de localiser la position approximative du module de sécurité. Les messages de contrôle peuvent être encrypté par une clé de transmission différente selon la région considérée. Le contenu est encrypté par des mots de contrôle qui ne sont pas transmis dans les messages de contrôle. Une opération de mélange (encryption, XOR, Hash etc) est effectuée sur chaque mot de contrôle CW avec une clé locale LK. Les mots de contrôle modifiés CW' sont transmis dans les messages de contrôle.

La clé locale LK est uniquement accessible via les seconds moyens de communication. Le module de sécurité s'identifie auprès du centre de traitement et si l'identification est positive, ce centre lui transmet la clé locale. Le module de sécurité pourra retrouver les mots de contrôle réels en décryptant les messages de contrôle et appliquant la même opération de mélange avec la clé locale LK.

Il va de soit que tous les échanges entre le module de sécurité et le centre de traitement sont encryptés.

## Revendications

1. Module de sécurité comprenant une unité centrale (CU), des premiers moyens de communication (3) destinés à transmettre des informations avec une unité de réception, **caractérisé en ce qu'**il comprend en outre des seconds moyens de communication (1) actifs par voie hertzienne, ces seconds moyens permettant une liaison vers un centre de traitement.

2. Module de sécurité selon la revendication 1 comprenant des moyens cryptographiques en charge de décrypter des messages provenant des premiers moyens de communication, **caractérisé en ce qu'**il comporte au moins une clé utilisée pour la décryption desdits messages provenant des seconds moyens de communication.

3. Module de sécurité selon les revendications 1 ou 2, comprenant des moyens cryptographiques en charge de décrypter des messages provenant des premiers moyens de communication pour en extraire un premier mot de contrôle, **caractérisé en ce qu'**il comprend des moyens pour calculer un second mot de contrôle destiné à l'unité de réception résultant de la combinaison du premier mot de contrôle et d'une information provenant des seconds moyens de communication.
